# EUROPÄISCHE PATENTANMELDUNG

(11) **EP 1 197 175 A1**
(43) Veröffentlichungstag der Anmeldung: **17.04.2002**
(21) Anmeldenummer: 01123341.8
(22) Anmeldetag: 09.10.2001
(51) Int. Cl.: A47J 31/44

(54) **Vorrichtung zur Erzeugung von Milchschaum für ein Kaffeegetränk, insbesondere für Cappuccino-Kaffee**

(30) Priorität: 13.10.2000 DE 10050719
(71) Anmelder: Tchibo Frisch-Röst-Kaffee GmbH, 22297 Hamburg (DE)
(72) Erfinder: Theede, Carsten, 24806 Lohe Föhrden (DE); Ternité, Rüdiger, 21149 Hamburg (DE); Hahn, Kerstin, 22529 Hamburg (DE)
(74) Vertreter: UEXKÜLL & STOLBERG

(57) **Zusammenfassung**

Die Erfindung betrifft eine Vorrichtung zum Aufschäumen und gleichzeitigen Erhitzen von Milch für die Erzeugung eines Kaffeegetränks, vorzugsweise von Cappuccino-Kaffee, mit einem Rohr (1), das mit einem ersten Ende an eine Dampferzeugungsquelle angeschlossen ist und das an seinem zweiten Ende mindestens eine Bohrungen (8) für den Dampfaustritt aufweist. Sie zeichnet sich dadurch aus, daß das Rohr (1) mit ersten Eintrittsöffnungen (5) für den Eintritt von Luft und mit zweiten Eintrittsöffnungen (6) für den Eintritt von Milch (6) versehen ist, die im Inneren des Rohres (1) zu einem Dampf-Luft-Milch-Gemisch gemischt werden, und daß am freien Ende des Rohres (1) mindestens eine drehbare Rührschaufel (4) angeordnet ist, in deren Bereich das Dampf-Luft-Gemisch aus der mindestens einen Bohrung (8) ausströmt.

## Beschreibung

Die Erfindung betrifft eine Vorrichtung gemäß Oberbegriff des Patentanspruchs 1.

Bei der Erzeugung eines Kaffeegetränks wünscht der Verbraucher nicht selten die Zugabe von Milch. Besonders beliebt ist es dabei, die Milch nicht einfach mit dem Kaffeegetränk zu vermischen, sondern zuvor aufzuschäumen, wie dies bei der Zubereitung eines Cappuccino-Kaffees üblich ist. Bislang ist man dabei so vorgegangen, daß Milch in einem Behälter mit Wasserdampf erwärmt und aufgeschäumt wurde, wobei der Wasserdampf von einer Dampfquelle durch ein Rohr in den Behälter eingeleitet wurde. Die Bedienungsperson taucht das Rohr in die Milch und bewegt den Behälter auf und ab, ohne dabei die Dampfleitung aus der Milch herauszuziehen. Durch diese Auf- und Abbewegung verbunden mit dem gleichzeitigen Einleiten des Dampfstrahls wird die Milch aufgeschäumt, um anschließend auf das Kaffeegetränk aufgebracht zu werden, und zwar entweder durch vorsichtiges Aufgießen oder durch Übertragen mit einem Löffel.

Ein Vorteil dieses bekannten Verfahrens besteht darin, daß es dem Verbraucher den Eindruck übermittelt, das Cappuccino-Getränk werde ausgesprochen individuell zubereitet.

Ein Nachteil des bekannten Verfahrens zur Erzeugung von Milchschaum besteht darin, daß der Handhabungsaufwand beträchtlich und damit für Brühautomaten oder ungeübte Verbraucher kaum zumutbar ist.

Es ist daher **Aufgabe** der Erfindung, eine Vorrichtung zur Erzeugung von Milchschaum für Cappuccino-Kaffee und zur gleichzeitigen Erhitzung der Milch zu schaffen, die weitgehend automatisch arbeitet und damit die Milchschaumerzeugung vereinfacht.

Zur **Lösung** dieser Aufgabe dient eine Vorrichtung mit den Merkmalen des Patentanspruchs 1.

Dadurch wird erreicht, daß der Benutzer ein Gefäß mit Milch nur unter das Rohr der Dampfleitung zu stellen und das Rohr soweit in die Milch einzutauchen braucht, bis die Rührschaufel und die Milch-Eintrittsöffnung oder die Eintrittsöffnungen von der Milch abgedeckt sind. Dies kann entweder von Hand geschehen oder durch Hochfahren eines am Brühautomaten angebrachten Tisches oder durch Absenken der Rühreinheit. Daraufhin wird beispielsweise durch Knopfdruck die Dampfzufuhr ausgelöst, wodurch die Rührschaufel in Bewegung gesetzt wird und durch ihre Drehbewegung die Bildung von Milchschaum zusammen mit dem gleichzeitig einströmenden Dampf-Luft-Milch-Gemisch unterstützt.

Vorteilhafte Ausgestaltungen der Erfindung sind Gegenstand der Unteransprüche.

Die Erfindung wird nachfolgend an Hand von Figuren näher erläutert; es zeigen:
- **Figur 1**: eine erste Ausführungsform; und
- **Figur 2**: eine zweite Ausführungsform.

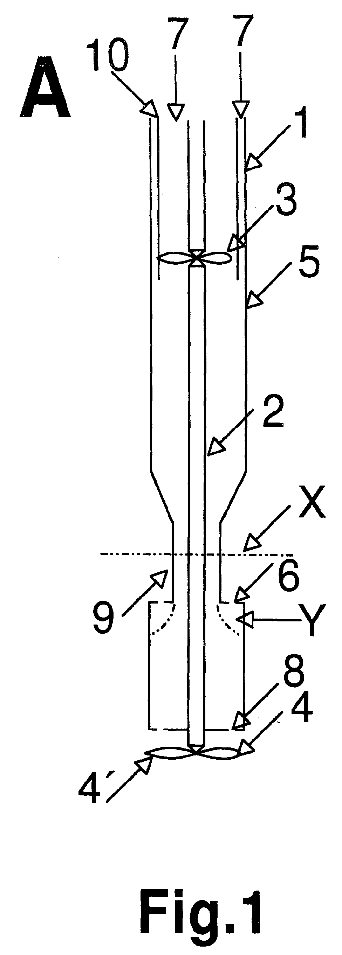

**Figur 1** zeigt eine erste Ausführungsform A mit einem Rohr 1, das mit seinem oberen Ende auf an sich bekannte Weise mit dem Gehäuse eine Brühautomaten verbunden ist. Die Verbindung kann lösbar oder unlösbar sein, je nachdem wie es der Fachmann wünscht.

Das untere, freie Ende des Rohrs 1 ist bis auf Bohrungen 8 und eine Durchführöffnung für eine Welle 2 geschlossen. In der Nähe des unteren freien Endes weist das Rohr 1 eine Einschnürung 9 oder Verjüngung auf, in deren Bereich zwei oder mehrere Eintrittsöffnungen 6 für den Eintritt von Milch vorgesehen sind. Im Bereich der Verjüngung 9 ist das Rohr 1 ferner durch eine Steckkupplung entlang der Linie X getrennt, um den unteren Teil des Rohres 1, der mit der Milch in Berührung kommt, leicht abnehmen und reinigen zu können.

Im Inneren des Rohrs 1 verläuft eine Welle 2, die sich bei dem ersten Ausführungsbeispiel vollständig durch das Rohr 1 erstreckt und mit ihrem freien Ende unten aus dem Rohr 1 herausragt. Am freien unteren Ende der Welle 2 ist eine Rührschaufel 4 angeordnet, die zweckmäßigerweise mindestens zwei Flügel 4' aufweist. Die Rührschaufel 4 dient bei sich drehender Welle 2 dazu, die Milch aufzuquirlen und gleichmäßig zu erhitzen, um in Verbindung mit dem Dampfstrom den Aufschäumvorgang zu unterstützen.

Zum Antrieb der Welle 2 dient eine Antriebsschaufel 3, die im Inneren des Rohrs 1 auf der Welle 2 angebracht ist und die von dem Dampfstrom angeströmt wird. Durch den im Inneren des Rohrs 1 strömenden Dampf wird die Antriebsschaufel 3 in Drehung versetzt, so daß auf diese Weise die Welle 2 gedreht wird und damit die Rührschaufel 4 in Drehbewegung versetzt.

Innerhalb des Rohrs 1 erstreckt sich bis kurz unter die Antriebsschaufel 3 ein Innenrohr 10, welches einen Teil des durchströmenden Dampfes an der Antriebsschaufel 3 vorbei direkt in des Rohr 1 leitet.

Zwischen der Trennlinie X und der Antriebsschaufel 3 ist das Rohr außerdem mit ein oder mehreren Eintrittsöffnungen 5 für Luft versehen, durch die Luft von außen in das Rohr 1 einströmen und damit ein Dampf-Luft-Gemisch bilden kann. Dieses Dampf-Luft-Gemisch strömt im Inneren des Rohrs 1 entlang der Welle 2 zu den Bohrungen 8 und muß dabei die Verjüngung 9 passieren, in der eine Geschwindigkeitserhöhung erfolgt. Durch diese Geschwindigkeitserhöhung wird Milch durch die Eintrittsöffnungen 6 in den unteren Teil des Rohres 1 gesaugt und mit dem Dampf-Luft-Gemisch verwirbelt. Nach dem Passieren der Bohrungen 8 erfolgt eine zusätzliche Verwirbelung durch die Rührschaufel 4, was letztendlich zu einem guten Aufschäumen und Erhitzen der Milch und damit zu Erzeugung eines Milchschaums von akzeptabler Konsistenz für einen Cappuccino-Kaffee führt.

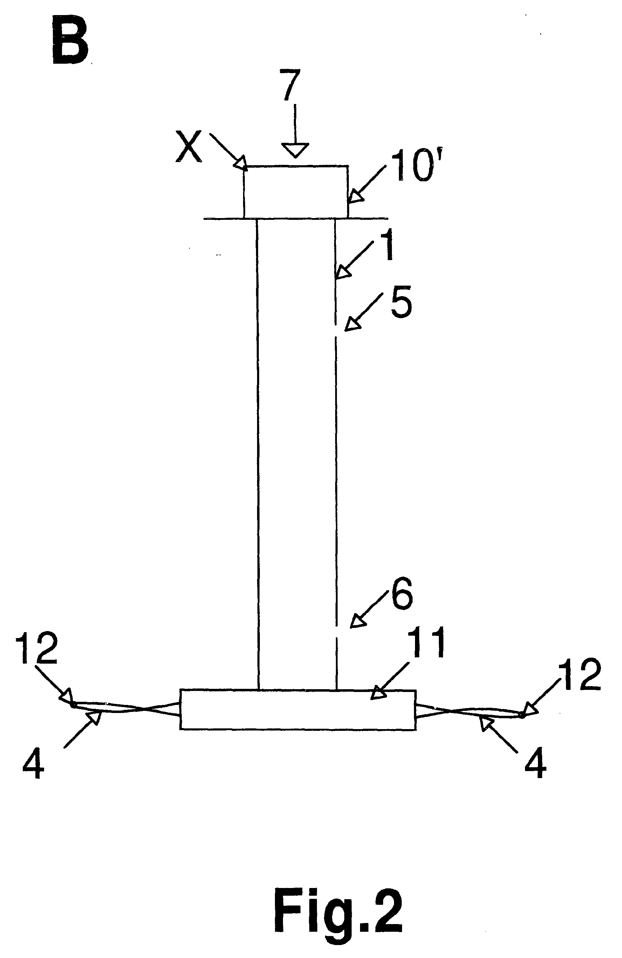

**Figur 2** zeigt das zweite Ausführungsbeispiel B der Erfindung, bei dem gleiche Teile mit gleichen Bezugszeichen versehen sind.

Anders als bei dem ersten Ausführungsbeispiel A ist aber das Rohr 1 nicht starr, sondern über eine Drehkupplung 10' mit einem nicht dargestellten Rohrstutzen eines Brühautomaten gekoppelt. Am unteren Ende des Rohrs 1 ist eine Mischkammer 11 angeordnet, die als Auslaß eine Rührschaufel 4 aufweist, die einteilig oder mehrteilig sein kann. An den Enden der Rührschaufel 4 sind Düsen 12 angeordnet, durch die der von oben eingeleitete Dampf 7 aus dem Rohr 1 abströmen kann. In der Nähe der Mischkammer 11 ist wiederum mindestens eine Eintrittsöffnung 6 angeordnet, während im Abstand dazu und damit näher zur Drehkupplung 10' mindestens eine Eintrittsöffnung 5 für Luft vorgesehen ist. Bei diesem zweiten Ausführungsbeispiel wird das Rohr 1 durch den aus den Düsen 12 ausströmenden Dampfstrom in Drehbewegung versetzt, wobei die schiffsschraubenartige Rührschaufel 4 gleichzeitig eine quirlenden Bewegung der umgebenden Milch erzeugt. Durch den ausströmenden Dampf wird die Milch dabei gleichzeitig erhitzt.

## Patentansprüche

1. Vorrichtung zum Aufschäumen und gleichzeitigen Erhitzen von Milch für die Erzeugung eines Kaffeegetränks, vorzugsweise von Cappuccino-Kaffee, mit einem Rohr (1), das mit einem ersten Ende an eine Dampferzeugungsquelle angeschlossen ist und das an seinem zweiten Ende mindestens eine Bohrungen (8) für den Dampfaustritt aufweist, **dadurch gekennzeichnet, daß** das Rohr (1) mit ersten Eintrittsöffnungen (5) für den Eintritt von Luft und mit zweiten Eintrittsöffnungen (6) für den Eintritt von Milch (6) versehen ist, die im Inneren des Rohres (1) zu einem Dampf-Luft-Milch-Gemisch gemischt werden, und daß am freien Ende des Rohres (1) mindestens eine drehbare Rührschaufel (4) angeordnet ist, in deren Bereich das Dampf-Luft-Milch-Gemisch aus der mindestens einen Bohrung (8) ausströmt.

2. Vorrichtung nach Anspruch 1, **dadurch gekennzeichnet, daß** die Rührschaufel (4) am Ende einer durch das Rohr (1) geführten Welle (2) angeordnet ist.

3. Vorrichtung nach Anspruch 2, **dadurch gekennzeichnet, daß** eine Antriebsschaufel (3) auf der Welle (2) angeordnet ist.

4. Vorrichtung nach Anspruch 3, **dadurch gekennzeichnet, daß** die Antriebsschaufel (3) im Abstand zur Rührschaufel (4) im Inneren des Rohres (1) angeordnet ist.

5. Vorrichtung nach einem der Ansprüche 1 bis 4, **dadurch gekennzeichnet, daß** das Rohr (1) zwischen der oder den Luft-Eintrittsöffnungen (5) und den Milch-Eintrittsöffnungen (6) mit einer Einschnürung (9) versehen ist.

6. Vorrichtung nach Anspruch 1, **dadurch gekennzeichnet, daß** die Rührschaufel (4) am freien Ende des Rohres (1) angeordnet und zusammen mit dem Rohr (1) drehbar ist, und daß das Rohr (1) über eine drehbare Kupplung (10) mit der Dampfquelle gekoppelt ist.

7. Vorrichtung nach Anspruch 6, **dadurch gekennzeichnet, daß** die Rührschaufel (4) über eine Mischkammer (11) mit dem freien Ende des Rohres (1) verbunden ist und an ihrem freien Ende ein oder mehrere Düse (12) aufweist.

8. Vorrichtung nach Anspruch 2 oder 7, **dadurch gekennzeichnet, daß** die Rührschaufel (4) mindestens einen Flügel aufweist.
